(19) **Europäisches Patentamt**
**European Patent Office**
**Office européen des brevets**

(11) **EP 1 819 756 B1**

(12) **EUROPEAN PATENT SPECIFICATION**

(45) Date of publication and mention
of the grant of the patent:
**22.10.2014 Bulletin 2014/43**

(51) Int Cl.:
*C08J 5/18* (2006.01)      *C08J 7/04* (2006.01)

(21) Application number: **05721967.7**

(22) Date of filing: **22.03.2005**

(86) International application number:
**PCT/KR2005/000826**

(87) International publication number:
**WO 2006/025636 (09.03.2006 Gazette 2006/10)**

(54) **BIAXIALLY ORIENTED POLYESTER FILM AND PREPARATION THEREOF**

BIAXIAL ORIENTIERTE POLYESTERFOLIE UND HERSTELLUNG DAVON

FILM POLYESTER A ORIENTATION BIAXIALE ET PREPARATION DE CELUI-CI

(84) Designated Contracting States:
**AT BE BG CH CY CZ DE DK EE ES FI FR GB GR HU IE IS IT LI LT LU MC NL PL PT RO SE SI SK TR**

(30) Priority: **02.09.2004 KR 2004069912**
**06.01.2005 KR 2005001079**

(43) Date of publication of application:
**22.08.2007 Bulletin 2007/34**

(73) Proprietor: **SKC Co., Ltd.**
**Suwon-city,**
**Kyungki-do 440-300 (KR)**

(72) Inventors:
• **KIM, Nam-Il**
  **Suwon-si,**
  **Kyungki-do 440-300 (KR)**
• **KIM, Sang-Il**
  **Suwon-si,**
  **Kyungki-do 441-460 (KR)**
• **KIM, Kyung-Yon**
  **Koyang-si,**
  **Kyungki-do 411-812 (KR)**
• **OH, Taebyoung**
  **Seoul 158-759 (KR)**
• **KIM, Youngwon**
  **Suwon-si,**
  **Kyungki-do 440-301 (KR)**

(74) Representative: **Grünecker, Kinkeldey,**
**Stockmair & Schwanhäusser**
**Leopoldstrasse 4**
**80802 München (DE)**

(56) References cited:
**JP-A- 2000 063 537      JP-A- 2000 094 513**
**JP-A- 2000 103 876      JP-A- 2000 344 909**
**KR-A- 960 010 715       KR-A- 20000 011 259**

• **DATABASE WPI Week 200255 Thomson Scientific, London, GB; AN 2002-511746 XP002637471, -& JP 2002 069276 A (UNITIKA LTD) 8 March 2002 (2002-03-08)**
• **DATABASE WPI Week 199927 Thomson Scientific, London, GB; AN 1999-323691 XP002637472, & JP 11 116787 A (ASAHI KASEI KOGYO KK) 27 April 1999 (1999-04-27)**
• **DATABASE WPI Week 200029 Thomson Scientific, London, GB; AN 2000-333255 XP002637473, -& JP 2000 103877 A (TEIJIN LTD) 11 April 2000 (2000-04-11)**
• **DATABASE WPI Week 200022 Thomson Scientific, London, GB; AN 2000-251581 XP002637474, & JP 2000 063538 A (TEIJIN LTD) 29 February 2000 (2000-02-29)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention is directed to a biaxially oriented polyester film which is useful for packaging and preparation thereof.

**BACKGROUND OF THE INVENTION**

High impact strength is required of wrapping material compounds for food and other goods. For this purpose, biaxially oriented nylons, polyethyleneterephthalates, and polypropylenes have been employed. Biaxially oriented nylon films have good impact strength at low temperature and high pin-hole resistance, but are disadvantageous in that they are hygroscopic (unsatisfactory for long-term storage) and are hampered by poor printability due to non-uniform thickness of the film. On the other hand, biaxially oriented polyethyleneterephthalate films and biaxially oriented polypropylene films have good printability and excellent heat resistance along with high dimensional stability. However, these materials show poor impact strength and pin-hole resistance.

JP 2000-063537 relates to a biaxially oriented polyester film showing high barrier properties and flexibility. However, said document does not teach the specific glycol components required in the polyester films in accordance with the present invention.

**SUMMARY OF THE INVENTION**

Accordingly, it is an object of the present invention to provide a biaxially oriented polyester film having excellent moisture-resistance, printability, impact strength, pin-hole resistance, conformity to the shape processing and processability at a low temperature, which can be effectively used for packaging, and preparation thereof.

In accordance with the present invention, there is provided a biaxially oriented polyester film prepared from a polyester resin obtained by polymerizing a glycol component comprising 1,3-propanediol as a major component with an acid component comprising terephthalic acid or dimethyl terephthalate as a major component, the resulting polyester film having a unit impact absorption energy of 9.8 N-cm/$\mu$m (1.0 kgf-cm/$\mu$m), wherein 50% more or less of the glycol component is selected from the group consisting of 2,2-dimethyl-1,3-propanediol, 2-methyl-1,3-propanediol, and a mixture thereof

**DETAILED DESCRIPTION OF THE INVENTION**

A biaxially oriented polyester film in accordance with the present invention is prepared by polymerizing a glycol component and an acid component. Preferably, 50 mole% or more of the glycol component is 1,3-propanediol. Also, it is preferable that 85 mole% or more of the acid component is terephthalic acid or dimethyl terephthalate, and 15 mole% or less of the acid component is a linear aliphatic dibasic acid having 2 or more carbons.

According to the preferred embodiment of the present invention, the biaxially oriented polyester film can be manufactured by the following procedures. First, film composition satisfying the component contents described above is prepared. Next, the composition thus prepared is melt-extruded, and then quenched to be a cast sheet. The cast sheet is drawn at a ratio of 2 to 4 in the longitudinal direction and at a ratio of 3 to 5 in the transverse direction before heat-setting at a temperature range of 180 to 225°C.

The glycol component for use in the inventive biaxially oriented polyester film includes 50 mole% or more, preferably 70 mole% or more of a 1,3-propanediol. If the amount of the 1,3-propanediol with respect to total glycol component is less than 50 mole%, the impact strength and pin-hole resistance of the resulting film may not be satisfactory.

50 mole% or less, preferably 30 mole% or less of the glycol component for use in the inventive polyester film is selected from the group consisting of 2,2-dimethyl-1,3-propanediol(neopentylglycol), 2-methyl-1,3-propanediol, and a mixture thereof. If the amount of 2,2-dimethyl-1,3-propanediol, or 2-methyl-1,3-propanediol exceeds 50 mole% of the total glycol component, the crystallization process of the film becomes so slow that the film forming process is adversely affected. Also, this has bad effects on dimensional stability and heat resistance of the film. If the amount of a linear glycol component having 4 or more carbons such as 1,4-butanediol, 1,5-pentanediol, 1,6-hexanediol and polyethyleneglycol(PEG) exceeds 50 mole%, the film thermal characteristics decline even though the flexibility of the film may increase. Further, if the amount of ethyleneglycol exceeds 50 mole% of the total glycol component, the impact strength and flexibility of the film become poor.

The film may further comprise a diethyleneglycol, triethyleneglycol or 1,4-cyclohexanedimethartol as glycol component to the extent they do not adversely affect the film properties.

Further, an acid component is needed in polymerizing the inventive biaxially oriented polyester film. 85 mole% or more, preferably 90 mole% or more of the acid component is terephthalic acid or dimethyl terephthalate. 15 mole% or less, preferably 10 mole% or less of the acid component is linear aliphatic dibasic acid having 2 or more carbons.

The addition of linear aliphatic dibasic acids having 2 or more carbons improves the flexibility of the film, thereby raising the film's impact strength, pin-hole resistance and processability. However, if this amount exceeds 15 mole% of the acid component, the thermal characteristics becomes poor and the film drawing is adversely affected. Examples of such an aliphatic dibasic acid are succinic acid, glutaric acid, adipic acid, suberic acid, azelaic acid, sebacic acid and esters thereof.

The film may further include, e.g., naphthalenedicarboxylic acid or isophthalic acid as an acid component to the extent they do not deteriorate the properties of the film.

The polyester film composition may be obtained by copolymerizing monomer components or blending polymers.

The film of the present invention may include suitable amounts of inorganic particles e.g., calcium carbonate, alumina or silica gel particles with average particle diameter of 0.1-10.0 $\mu$m as running enhancer (lubricants) although the influence of these materials on the optical characteristics of the film must be taken into account.

The inventive biaxially oriented polyester film can be manufactured as follows. First, a polyester resin having a desired composition is subjected to melt-extrusion, which is then quenched to be a cast sheet. The cast sheet is drawn to a ratio of 2 to 4, preferably, 2.5 to 3.5 in the longitudinal direction and to a ratio of 3 to 5, preferably, 3.4 to 3.9 in the transverse direction. The drawings in the transverse and longitudinal directions can be performed in one or two steps. The film's impact strength and thickness uniformity are adversely affected if the longitudinal or transverse drawing ratio is less than 2 or 3, respectively. On the other hand, the processability as well as the impact strength of the film becomes poor if the longitudinal or transverse drawing ratio is more than 4 or 5, respectively.

The film drawn both in the longitudinal and transverse directions is heat-set at a temperature in the range of 180 to 225 °C, preferably, 185 to 215 °C before being quenched so that satisfactory dimensional stability can be attained. If the film is heat-set at a temperature below 180 °C, desired dimensional stability cannot be achieved. Further, if the film is heat-set at a temperature above 225 °C, the impact strength becomes low.

When manufacturing a conventional polyethyleneterephthalate or a film comprising polyethyleneterephthalate as its main component, heat-setting is conducted right after drawing and then quenching is performed for relaxation. However, when polytrimethyleneterephthalate is employed as the main component of the film as in the present invention, a high level of shrinkage stress can be formed during the drawing process and such stress causes failure of the film during heat-setting. Accordingly, it is preferable that heat-setting is conducted after the relaxation step so that the shrinkage stress formed during drawing process is relieved prior to heat application. Such being the case, the relaxation step comes first after drawing when polytrimethyleneterephthalate is employed as the main component of the film. The relaxation step can be conducted at a relaxation rate of 7-14% at a temperature in the range of 140-180°C.

After heat-setting, the film can be just quenched at a temperature below 50 °C or subjected to further relaxation as needed. For instance, since the longitudinal property of the final film product may be adversely affected by excessive relaxation right after drawing, the relaxation may be conducted in two steps, adding a second relaxation step during the quenching period after heat-setting, to lower the first relaxation rate right after drawing, thereby minimizing the deterioration of the longitudinal property of the film. The condition of the second relaxation step may be the same as the first one, which is conducted at a relaxation rate of 7-14% at a temperature range of 140-180 °C .

The polytrimethyleneterephthalate-based biaxially oriented polyester films of the present invention manufactured by the above process may have a thickness of 7-30 $\mu$m (but is not limited thereto).

A polyester film in accordance with the present invention has a unit impact absorption energy of 9.8 N-cm/$\mu$m (1.0 kgf-cm/$\mu$m) or more and, preferably, generates 25 or less pin-holes after being subjected to repeated stress at ambient temperature. A film having a unit impact absorption energy of less than 9.8 N-cm/$\mu$m (1.0 kgf-cm/$\mu$m) cannot be used as a high capacity pouch for a good weighing 500 g or more. Further, if the number of pin-holes exceeds 25 in a test, the film may be susceptible to actual pin-hole generation during transportation. Further, when treated with heat in an air-circulation oven at 150 °C for 30 minutes, a film of the present invention shows 8% or less, preferably 5% or less, more preferably 3% or less heat shrinkage in either the longitudinal or transverse direction. If such heat shrinkage of a film exceeds 8%, it causes problems during the printing, laminating and thermal bonding processes.

Most importantly, if a film is manufactured by conducting relaxation after drawing(but before heat-setting) in the transverse and longitudinal directions, the degree of elongation in the longitudinal and transverse directions is lowered by 30% or less, preferably 20% or less when heated at 180 °C for two seconds. Accordingly, when this film material is used in a bag packaging, pin-hole production can be minimized at the boundaries between the thermal bonding and non-thermal bonding regions. Thus, good sealing properties along with excellent drop impact strength can be obtained.

As shown above, the biaxially oriented polyester films of the present invention can be efficiently used as a wrapping film due to its superior moisture-resistance, impact strength, processability, conformity to the shape wrapping and flexibility in addition to its excellent mechanical strength, dimensional stability and printability. Further, the inventive film may be advantageously used as a laminated wrapping material in the form of one or more polymer layers/metal layers being laminated thereon.

The present invention is further described and illustrated in Examples, which are, however, not intended to limit the scope of the present invention.

Preparation Example

In the Preparation Examples of the present invention, an esterification reactor equipped with a stirrer operable at 200 rpm and a packed separation tower for the separation of 1,3-propanediol and water from the reaction discharges were used together with a separate reactor equipped with an inverter-type stirrer operable at 10-50 rpm, a condenser for condensing discharges, a polymerization reactor having suction pump.

The properties of the polymers manufactured in the Preparation Example were measured as follows.

(1) Intrinsic Viscosity

The intrinsic viscosity was measured according to a typical intrinsic viscosity measuring procedure at a temperature of 30 °C using a polyethyleneterephthalate sample dissolved in orthochlorophenol.

(2) Composition

A polymer sample dissolved in a 4:1 mixture of deutro-chloroform and trifluoroacetic acid was subjected to quantitative NMR analysis with JSM-LA300 Type $^1$H-NMR (Jeol Inc., Japan). Relative areas of characteristic peaks based on a read out were converted into mole%. Some of the compositions gave values different from calculated values, which was judged to have originated from non-homogeneous mixing of constituents polymers.

(3) Melting Point

DSC(Perkin-Elmer Inc.) analysis was performed at a temperature elevation rate of 10 °C /min. The glass transition temperature(Tg, °C) was determined from the first peak in the heat absorption curve. The next peak in the curve corresponded to the crystallization temperature(Tc, °C) and the third heat absorption peak, to the melting point(Tm, °C).

Preparation Example 1: Polytrimethyleneterephthalate (Polymer A)

For 100 parts. by mole of terephthalic acid, 130 parts by mole of 1,3-propanediol were put into an esterification reactor along with a catalyst. The catalyst employed was tributylene titanate, the amount thereof being 0.07 weight% with respect to terephthalic acid. The reactor was pressurized to about $1.3 kg/cm^2$ and its temperature was elevated to 260°C, to conduct esterification reaction at that temperature for about 4 hours. Next, trimethylphosphate(a stabilizer) in the amount of 0.06 weight% with respect to terephthalic acid was mixed with the esterification reactants. Also, a silica powder having an average particle diameter of 2.5μm(a slip agent) was added thereto in an amount of 0.07 weight% with respect to terephthalic acid. The mixture was then agitated for 5 minutes and transferred to a polymerization reactor. The polymerization reactor was maintained at 265 °C and subjected to slow evacuation. The polymerization reaction continued therein until the agitator motor uses up a measured amount of electrical power. The polymer product was recovered in the form of pellets(intrinsic viscosity: 0.86).

Preparation Example 2: Adipic acid copolymer (polymer B)

As shown in Table 1, for 100 parts by mole of the combined sum of terephthalic acid(TPA) and adipic acid(AA), 130 parts by mole of 1,3-propanediol were put into an esterification reactor along with a catalyst. The catalyst employed was tributylene titanate, the amount thereof being 0.07 weight% with respect to terephthalic acid. The reactor was pressurized to about $1.2 kg/cm^2$ and its temperature was elevated to 260 °C to conduct an esterification reaction at that temperature about 4 hours. Next, trimethylphosphate(a stabilizer) in the amount of 0.06 weight% with respect to terephthalic acid was mixed with the esterification reactants. Also, a silica powder having an average particle diameter of 2.5 μcm(a slip agent) was added thereto in an amount of 0.07 weight% with respect to terephthalic acid. The mixture was then agitated for 5 minutes and transferred to a polymerization reactor. The polymerization reactor was maintained at 250 °C and subjected to slow evacuation. The polymerization reaction continued therein until the agitator motor uses up a measured amount of electrical power. The polymer product was recovered in the form of pellets. Characteristics of the pellets, thus obtained, are shown in Table 1 below.

Table 1

| | AA | TPA | Tg(°C) | Tc(°C) | Tm(°C) | Intrinsic Viscosity. (g/dl) | Composition (Mole%) |
|---|---|---|---|---|---|---|---|
| B-1 | 5 | 95 | 36.23 | 63.2 | 217.3 | 0.861 | 4 |
| B-2 | 10 | 90 | - | 59.8 | 216.2 | 0.843 | 9 |
| B-3 | 15 | 85 | - | 55.2 | 210.6 | 0.831 | 13 |
| B-4 | 30 | 70 | - | - | 187.5 | 0.769 | 28 |

Preparation Example 3: Polybutyleneterephthalate (Polymer C)

LUPOX HV-1010® (manufactured by LG Chemicals Inc.) was employed as polybutyleneterephthalate.

Preparation Example 4: Polyethyleneterephthalate (Polymer D)

For 100 parts by mole of terephthalic acid, 130 parts by mole of ethylene glycol were put into an esterification reactor. The reactor was pressurized to 1.2kg/cm$^2$ and its temperature was elevated to 260 °C, to conduct an esterification reaction at that temperature for about 4 hours. Antimony trioxide(a polymerizing catalyst) and trimethylphosphate(a stabilizer) were added to the esterification reactants for mixing therein, in the amounts of 450 ppm and 400 ppm with respect to terephthalic acid, respectively. Also, a silica powder having an average particle diameter of 2.5$\mu$m(a slip agent) was added thereto in an amount of 0.07 weight% with respect to terephthalic acid. The mixture was then agitated for 5 minutes and transferred to a polymerization reactor. The polymerization reactor was maintained at 289 °C and subjected to slow evacuation. The polymerization reaction continued therein for 3 hours and 20 minutes. The intrinsic viscosity of the polymer product was 0.64.

Preparation Example 5: 2-methyl-1,3-propanediol copolymer (Polymer E)

The procedure of Preparation Example 2 was repeated except that "130 parts by mole of ethylene glycol" was replaced by "80 parts by mole of 1,3-propanediol and 50 parts by mole of 2-methyl-1,3-propanediol." The resulting polymer product was recovered in the form of pellets(intrinsic viscosity: 0.84).

Preparation Example 6: 2,2-dimethyl-1,3-propanediol copolymer (Polymer F)

The procedure of Preparation Example 2 was repeated except that "130 parts by mole of ethylene glycol" was replaced by "80 parts by mole of 1,3-propanediol and 50 parts by mole of 2,2-dimethyl-1,3-propanediol." The resulting polymer product was recovered in the form of pellets(intrinsic viscosity: 0.76).

Preparation Example 7: 1,2-propanediol copolymer (Polymer G)

The procedure of Preparation Example 2 was repeated except that "130 parts by mole of ethylene glycol" was replaced by "80 parts by mole of 1,3-propanediol and 50 parts by mole of 1,2-propanediol." The resulting polymer product was recovered in the form of pellets(intrinsic viscosity: 0.81).

Experimental Example

Using the polymers prepared in Preparation Examples, films were manufactured in accordance with the procedures shown in Examples and Comparative Examples. The properties of the produced film were measured by the following methods, except when the film sample was not smooth or subject to breakage.

(1) Unit impact absorption energy

The unit impact absorption energy was measured according to ASTM D 3420 with Film Impact Tester (Toyoseiki Inc.). The Pendulum tip used was in the form of hemisphere with a diameter of 25,4 mm (1 inch). A sample film was fitted on the sample fixture having a 50 mm-diameter circular hole. The impact absorption energy (N-cm (kgf-cm)), thus measured, was divided by the sample film thickness ($\mu$m) to determine the unit impact absorption energy (N-cm/$\mu$m (kgf-cm/$\mu$m)). An average value derived from 10 tests was taken to represent each sample.

(2) Pin-hole resistance

A sample film was rotated around using Gelbo Flex (Gelbo Inc., USA) at an angle of 420 degree for 2700 cycles (about 60 minutes). Next, the sample film was placed flat on a white paper, whereon an oily ink was applied with a doctor blade. The numbers of ink dots appeared on the white paper was represented as the pin-hole number. An average value derived from 3 tests was taken to represent each sample.

(3) Drawing

The thickness and breakage of a drawn film were assessed by the following standards.

O Good: The average variation in the thickness was less than $\pm 5\%$, showing uniform drawing.
$\Delta$ Decent: The average variation in the thickness was less than $\pm$ 10%, showing relatively uniform drawing.
$\times$ Poor: The average variation in the thickness was $\pm 10\%$ or more, or breakage occurred during drawing.

(4) Heat shrinkage

A sample having the size of 200 mm long and 15 mm wide was maintained at 150°C in a circulating air oven for 30 minutes, as the changes in the film length was measured. Using the following equation, the shrinkage in the longitudinal and transverse directions were calculated.

$$\text{Shrinkage } (\%) = (\text{Length before heat treatment - Length after heat treatment}) / \text{Length before heat treatment X 100}$$

(5) Strength and elongation

The strength and elongation were measured according to ASTM D 288 using a film sample having the size of 100 mm long and 15 mm wide with Universal Tester (UTM 4206-001, Instron Inc.). The interval between chucks was set at 50 mm, and the elongation speed at 200 mm/min. The strength at 100% elongation was represented by F-100 (kg/mm$^2$). The elongation at breakage was marked with a breakage elongation (%) value, and the strength at breakage, with a breakage strength (kg/mm$^2$).

(6) Free fall rupture test

A conventional PET film with a thickness of 12 $\mu$m and a conventional laminating aluminum layer of $9\pm1$ $\mu$m thickness were laminated on one side of a sample film surface. A casting polypropylene was laminated on the other side thereof. Next, a pouch with 1300 ml capacity was manufactured so that the casting-propylene-laminated-side becomes the inside of the pouch. The pouch included a bottom paper so that it can stand by itself when filled with a merchandise. 1000 ml of water was put into the pouch and the pouch was sealed by heating. Then the pouch was stored in a refrigerator maintained at 5 °C for two days. A box made of a conventional corrugated cardboard of about 5 mm thickness was used to hold 10 such pouches, and it was subjected to free fall on a concrete floor varnished with an epoxy. Such a test was repeated 10 times and the average condition of the pouch was recorded by the following standards.

O   Good: Less than 4 ruptured.
$\Delta$   Decent: 4 or more and less than 7 ruptured.
$\times$   Poor: 7 or more ruptured.

(7) Shape processability

The low density polyethylene (LDPE) having a thickness of about 190 $\mu$m was subjected to extrusion lamination with a sample film. Three edges thereof were sealed by heating so that the laminated film took the shape of an envelope having a dimension of 200 nm X 150 nm. The above process was conducted such that the LDPE laminated side became the inside of the envelope. A wooden hexahedron having a dimension of 50 mm X 50 mm X 15 mm was placed in the envelope, the envelope was evacuated for 20 seconds, and sealed by heating with small vacuum sealing machine having a built-in vacuum pump at an exhaustion rate of about 10 L/min. Next, the envelope was left at ambient temperature for an hour and the space between the envelope and wooden hexahedron was measured, as graded according to the following standards.

○   Good: Space was less than 3 mm.
Δ   Decent: Space was 3 mm or more and less than 7 mm.
×   Poor: Space was 7 mm or more.

(8) Elongation degradation

A sample film was heated with a thermal adhesion tester (TP701S; Tester Sangyo Co., Japan) to 180 °C under a pressure of 0.2MPa for 2 seconds. The sample was then elongated at a rate of 200 mm/min by the procedures shown in ASTM D882 using Universal Tester (UTM 4206-001, Instron Inc.) and the degree of elongation was measured. Using the equation shown below, the elongation degradation was calculated in the longitudinal and transverse directions. An average value derived from 5 tests was taken for each sample. Since the intrinsic instrumental error is in the range of ±5%, no elongation degradation was reported when it was less than 5%.

$$\text{Elongation degradation (\%)} = (\text{Elongation before heating} - \text{Elongation after heating}) / \text{Elongation before heating} \times 100$$

(9) Film forming

The breakage and smoothness of a drawn film were assessed by the following standards.

○   Good: No breakage, good drawability and a smooth final film product.
Δ   Decent: No breakage, but strains present in the final film product.
×   Poor: Not fit for continuous production due to the breakage.

Examples 1 through 16 and Comparative Examples 1 through 9

Table 2 shows the polyester films manufactured by various compositions and process conditions, as their properties are shown in Table 3.

Table 2

EP 1 819 756 B1

| | Polymer Mix Ratio (Weight%) | | | | Film Composition (Mole%) | | | | | Drawing Ratio | | Drawing Temperature (°C) | | Heat Fixation Temperature (°C) | Film Thickness (μm) | Film Drawing |
| | | | | | Acid Component | | Diol Component | | | Longitudinal | Transverse | Longitudinal | Transvese | | | |
| | Polymer A | Polymer B | Polymer C | Polymer D | TPA | AA | EG | PDO | BDO | | | | | | | |
|---|---|---|---|---|---|---|---|---|---|---|---|---|---|---|---|---|
| Comparative Example 1 | 100 | - | - | - | 100 | - | - | 100 | - | 2.3 | 2.5 | 55 | 60 | 190 | 12 | X (Non-Uniform Drawing) |
| Example 1 | 100 | - | - | - | 100 | - | - | 100 | - | 3.0 | 32 | 55 | 60 | 195 | 12 | ○ |
| Comparative Example 2 | 100 | - | - | - | 100 | - | - | 100 | - | 3.0 | 32 | 55 | 60 | 170 | 12 | ○ |
| Comparative Example 3 | 100 | - | - | - | 100 | - | - | 100 | - | 4.5 | 4.5 | 55 | 60 | - | | X(Breakage) |
| Example 2 | 100 | - | - | - | 100 | - | - | 100 | - | 3.0 | 3.2 | 55 | 60 | 200 | 12 | △ |
| Example 3 | 100 | - | - | - | 100 | - | - | 100 | - | 2.5 | 3.4 | 55 | 60 | 190 | 15 | ○ |
| Example 4 | 100 | - | - | - | 100 | - | - | 100 | - | 2.5 | 3.4 | 55 | 60 | 190 | 20 | ○ |
| Example 5 | 100 | - | - | - | 100 | - | - | 100 | - | 2.5 | 3.4 | 55 | 60 | 190 | 25 | ○ |
| Example 6 | 75 | - | 25 | - | 100 | - | - | 74 | 24 | 3.5 | 3.5 | 50 | 55 | 200 | 12 | ○ |
| Example 7 | 75 | - | 25 | - | 100 | - | - | 74 | 24 | 3,5 | 3.5 | 50 | 55 | 190 | 12 | ○ |
| Example 8 | 70 | - | 30 | - | 100 | | | 71 | 29 | 3.2 | 3.5 | 50 | 55 | 200 | 12 | ○ |
| Comparative Example 4 | 75 | - | 25 | - | 100 | - | - | 74 | 24 | 4.5 | 45 | 50 | 55 | - | | X (Breakage) |
| Comparative Example 5 | 45 | - | 55 | - | 100 | - | - | 47 | 53 | 2.8 | 3.0 | 50 | 55 | 200 | 12 | ○ |
| Example 9 | - | B-1 100 | - | - | 96 | 4 | - | 100 | - | 3.2 | 3.3 | 50 | 55 | 185 | 12 | ○ |
| Example 10 | - | B-2 100 | - | - | 91 | 9 | - | 100 | - | 3.2 | 3.3 | 50 | 55 | 185 | 12 | ○ |

8

(continued)

| | Polymer Mix Ratio (Weight%) | | | | Film Composition (Mole%) | | | | | Drawing Ratio | | Drawing Temperature (°C) | | Heat Fixation Temperature (°C) | Film Thickness (μm) | Film Drawing |
|---|---|---|---|---|---|---|---|---|---|---|---|---|---|---|---|---|
| | Polymer A | Polymer B | Polymer C | Polymer D | Acid Component | | Diol Component | | | Longitudinal | Transverse | Longitudinal | Transvese | | | |
| | | | | | TPA | AA | EG | PDO | BDO | | | | | | | |
| Example 11 | 40 | B-3 60 | - | - | 92 | 8 | - | 100 | - | 3.2 | 3.3 | 50 | 55 | 195 | 12 | ○ |
| Example 12 | - | B-1 100 | - | - | 96 | 4 | - | 100 | - | 3.2 | 33 | 50 | 55 | 185 | 19 | ○ |
| Comparative Example 6 | 40 | B-4 60 | - | - | 83 | 17 | - | 100 | - | 3.2 | 33 | 50 | 55 | 185 | | X (Non-Uniform Drawing) |
| Example 13 | 50 | - | 25 | 25 | 100 | - | 26 | 51 | 2.3 | 3.3 | 3.7 | 65 | 70 | 195 | 12 | ○ |
| Example14 | 50 | - | 25 | 25 | 100 | - | 26 | 51 | 23 | 3.8 | 4.0 | 65 | 70 | 200 | 12 | ○ |
| Example 15 | 50 | - | 25 | 25 | 100 | - | 26 | 51 | 23 | 3.3 | 3.7 | 65 | 70 | 195 | 7 | ○ |
| Example 16 | 50 | - | 25 | 25 | 100 | - | 26 | 51 | 23 | 3.3 | 3.7 | 65 | 70 | 195 | 9 | ○ |
| Comparative Example 7 | 30 | - | - | 70 | 100 | - | 71 | 29 | - | 4.0 | 4.2 | 85 | 95 | 230 | 12 | ○ |
| Comparative Example 8 | 50 | - | 25 | 25 | 100 | - | 26 | 51 | 23 | 4.5 | 4.5 | 65 | 70 | - | | x (Breakage) |
| Comparative Example 9 | - | - | - | 100 | 100 | | 100 | - | - | 3.5 | 3.8 | 95 | 110 | 220 | 12 | ○ |

Polymer A : = Polytrimethyleneterephthalate (PTT), Polymer B : Adipic acid Co-polymerized polytrimethyleneterephthalate, Polymer C : Polybutyleneterephthalate (PBT)
Polymer D : Polyethyleneterephthalate, TPA : Terephthalic acid, AA : Adipic acid, EG: Ethylene glycol, PDO : 1,3-propanediol, BDO : 1,4-Butanediol

Table 3

| | Mechanical Properties | | | | | | Unit Impact Absorption Energy (Kgf-cm/μm) | Pin-hole resistance (Pin-hole numbers) | Heat Shrinkage, % (150 °C, 30 min) | | Rupture after Free fall | Shape Processing | Overall |
| | Breakage Strength (Kg/mm$^2$) | | F-100 (kg/mm$^2$) | | Elongation at Breakage (%) | | | | | | | | |
| | Longitudinal | Transverse | Longitudinal | Transverse | Longitudinal | Transverse | | | Longitudinal | Transverse | | | |
| Comparative Example 1 | - | - | - | - | - | - | - | - | - | - | - | - | × |
| Example 1 | 22 | 26 | 13 | 15 | 155 | 143 | 1.36 | 4 | 3.3 | 3.1 | ○ | ○ | ○ |
| Comparative Example 2 | 15 | 11 | 11 | 14 | 145 | 126 | 1.17 | 5 | 10.2 | 13.8 | ○ | ○ | × |
| Comparative Example 3 | - | - | - | - | - | - | - | - | - | - | - | - | × |
| Example 2 | 19 | 21 | 11 | 13 | 157 | 146 | 1.15 | 4 | 2.6 | 3.6 | ○ | ○ | ○ |
| Example 3 | 19 | 23 | 13 | 18 | 178 | 158 | 1.03 | 3 | 3.4 | 3.9 | ○ | ○ | ○ |
| Example 4 | 19 | 22 | 12 | 14 | 177 | 164 | 1.04 | 4 | 3.1 | 4.2 | ○ | ○ | ○ |
| Example 5 | 18 | 23 | 12 | 14 | 182 | 166 | 1.07 | 4 | 3.5 | 5.2 | ○ | ○ | ○ |
| Example 6 | 17 | 19 | 13 | 17 | 161 | 154 | 1.15 | 2 | 3.7 | 4.1 | ○ | ○ | ○ |
| Example 7 | 18 | 21 | 12 | 15 | 157 | 143 | 1.01 | 6 | 3.1 | 2.8 | Δ | Δ | Δ |
| Example 8 | 16 | 18 | 12 | 15 | 162 | 1.58 | 1.19 | 4 | 2.1 | 2.5 | ○ | ○ | ○ |
| Comparative Example 4 | - | - | - | - | - | - | - | - | - | - | - | - | × |
| Comparative Example 5 | 14 | 15 | - | 14 | 84 | 108 | 0.62 | 8 | 1.8 | 2.6 | × | ○ | × |
| Example 9 | 23 | 25 | 12 | 14 | 172 | 156 | 1.18 | 3 | 5.5 | 7.1 | ○ | ○ | ○ |
| Example 10 | 17 | 21 | 9 | 13 | 171 | 165 | 138 | 2 | 5.7 | 6.1 | ○ | ○ | ○ |

| | Mechanical Properties | | | | | | Unit Impact Absorption Energy (Kgf-cm/μm) | Pin-hole resistance (Pin-hole numbers) | Heat Shrinkage, % (150 °C, 30 min) | | Rupture after Free fall | Shape Processing | Overall |
|---|---|---|---|---|---|---|---|---|---|---|---|---|---|
| | Breakage Strength (Kg/mm$^2$) | | F-100 (kg/mm$^2$) | | Elongation at Breakage (%) | | | | Longitudinal | Transverse | | | |
| | Longitudinal | Transverse | Longitudinal | Transverse | Longitudinal | Transverse | | | | | | | |
| Example 11 | 21 | 22 | 12 | 14 | 182 | 169 | 1.33 | 3 | 3.1 | 4.5 | ○ | ○ | ○ |
| Example 12 | 21 | 23 | 13 | 16 | 173 | 183 | 1.18 | 3 | 4.9 | 5.2 | ○ | ○ | ○ |
| Comparative Example 6 | - | - | - | - | - | - | - | - | - | - | - | - | × |
| Example 13 | 22 | 24 | 15 | 18 | 192 | 187 | 1.08 | 21 | 2.6 | 3.1 | Δ | ○ | ○ |
| Example 14 | 22 | 25 | 16 | 17 | 134 | 135 | 1.15 | 18 | 4.7 | 5.9 | Δ | Δ | ○ |
| Example 15 | 19 | 21 | 14 | 18 | 188 | 172 | 1.27 | 16 | 2.9 | 3.9 | Δ | ○ | ○ |
| Example 16 | 20 | 24 | 15 | 18 | 178 | 169 | 1.14 | 15 | 3.2 | 4.1 | Δ | ○ | ○ |
| Comparative Example 7 | 23 | 25 | - | - | 94 | 78 | 0.19 | 27 | 1.6 | 1.5 | × | × | × |
| Comparative Example 8 | - | - | - | - | - | - | - | - | - | - | - | - | × |
| Comparative Example 9 | 21 | 25 | - | - | 89 | 76 | 0.72 | Crack | 2.5 | 2.7 | × | × | × |

1 kgf-cm/μm = 9.8 N-cm/μm

EP 1 819 756 B1

As shown in Tables 2 and 3 above, the inventive prepared films in the Examples are clearly superior to those of Comparative Examples in terms of mechanical properties, impact absorption energy, pin-hole resistance, heat shrinkage, rupture after free fall and shape processing.

Examples 17 through 23

The procedure of Example 1 was repeated except that film was subject to relaxation at 150 °C before heat-setting after the longitudinal and transverse drawing step, to obtain 15 μm-thick films listed in Table 4. The conditions and resulting properties are shown in Tables 4 and 5 below.

Table 4

| No. | Polymer Composition (Weight%) | | | | | Film Composition (Mole%) | | | | | | Drawing Ratio | | Drawing Temperature (°C) | | First Relaxation | | Heat-Set-ting Tem-perature (°C) | Second Relaxation (When Cooling) | |
|---|---|---|---|---|---|---|---|---|---|---|---|---|---|---|---|---|---|---|---|---|
| | Polymer | | | | | Acid Compo-nent | | Diol Component | | | | Longitudi-nal | Trans-verse | Longitudi-nal | Trans-verse | Tempera-ture (°C) | Relaxa-tion Rate (%) | | Tempera-ture (°C) | Relaxa-tion Rate (%) |
| | A | B-1 | B | P | G | TPA | AA | PDO | MPD | NPG | PG | | | | | | | | | |
| 17 | 100 | - | - | - | - | 100 | - | 100 | - | - | - | 2.8 | 3.6 | 55 | 60 | 150 | 7 | 190 | - | - |
| 18 | 100 | - | - | - | - | 100 | - | 100 | - | - | - | 2.8 | 3.6 | 55 | 90 | 150 | 9 | 200 | - | - |
| 19 | 50 | 50 | - | - | - | 86 | 14 | 100 | - | - | - | 2.8 | 3.5 | 50 | 55 | 150 | 7 | 190 | - | - |
| *20 | 50 | - | 50 | - | - | 100 | - | 77 | 23 | - | - | 3.0 | 3.6 | 60 | 65 | 150 | 7 | 190 | 140 | 2 |
| *21 | 50 | - | - | 50 | - | 100 | - | 91 | - | 9 | - | 2.8 | 3.6 | 55 | 60 | 150 | 7 | 190 | - | - |
| 22 | 50 | - | - | - | 50 | 100 | - | 86 | - | - | 14 | 3.3 | 3.8 | 55 | 65 | 170 | 9 | 195 | - | - |
| *23 | 50 | - | 50 | - | - | 100 | - | 77 | 23 | - | - | 2.6 | 3.6 | 50 | 55 | 150 | 7 | 205 | 140 | 3 |
| TPA : Terephthalic acid, AA : Adipic acid, PDO : 1,3-propanediol, MPD : 2-Methyl-1,3-propanediol<br>NPG : 2,2-Dimethyl-1,3-propanediol, PG : 1,2-Propanediol<br>*: Examples in accordance with the present invention. | | | | | | | | | | | | | | | | | | | | |

Table 5

| No. | Film forming | Film characteristics | | | | | | | |
|---|---|---|---|---|---|---|---|---|---|
| | | Heat shrinkage, % (150°C, 30 min) | | Elongation Degradation (%) | | Unit impact absorption energy (Kgf-cm/$\mu$m) | Pin-hole resistance | Rupture at free fall | Over all |
| | | L | T | L | T | | | | |
| 17 | ○ | 3.2 | 4.9 | 24 | 27 | 1.13 | 2 | Δ | ○ |
| 18 | ○ | 2.7 | 3.1 | 19 | 15 | 1.33 | 3 | ○ | ○ |
| 19 | ○ | 3.5 | 4.7 | 24 | 21 | 120 | 1 | ○ | ○ |
| *20 | ○ | 4.1 | 32 | None | None | 1.27 | 4 | ○ | ○ |
| *21 | ○ | 2.9 | 2.8 | None | None | 1.00 | 1 | ○ | ○ |
| 22 | ○ | 2.1 | 3.9 | 10 | 13 | 1.13 | 3 | ○ | ○ |
| *23 | ○ | 1.9 | 3.6 | None | None | 1.00 | 2 | ○ | ○ |

1 kgf-cm/$\mu$m = 9.8 N-cm/$\mu$m
L: Longitudinal
T: Transverse
* Examples in accordance with the present invention

From the results of Tables 4 and 5, it can be confirmed that films subjected to a relaxation step before heat-setting undergoes less elongation degradation in the longitudinal and transverse directions while heating.

## Claims

1. A biaxially oriented polyester film manufactured from a polyester resin, prepared by polymerizing a glycol component mainly comprising 1 ,3-propanediol, and an acid component mainly comprising terephthalic acid or dimethyl terephthalate, the polyester film having a unit impact absorption energy of 9.8 N-cm/$\mu$m (1.0 kgf-cm/$\mu$m) or more, wherein the unit impact absorption energy is measured according to ASTM D 3420, and
wherein 50 mole% or less of the glycol component is selected from the group consisting of 2,2-dimethyl-1,3-propanediol, 2-methyl-1,3-propanediol, and a mixture thereof.

2. The film of claim 1, wherein 50 mole% or more of the glycol component is 1,3-propanediol.

3. The film of claim 1, wherein 85 mole% or more of the acid component is terephthalic acid or dimethyl terephthalate.

4. The film of claim 1, wherein 15 mole% or less of the acid component is a linear aliphatic dibasic acid having 2 or more carbons.

5. The film of claim 4, wherein the aliphatic dibasic acid is selected from the group consisting of succinic acid, glutaric acid, adipic acid, suberic acid, azelaic acid, sebacic acid and ester derivatives thereof.

6. The film of claim 1, wherein the pin-hole occurrence is 25 or less after being subjected to repeated stress at ambient temperature,
wherein the pin-hole occurrence is measured by rotating a sample film around at an angle of 420° for 2770 cycles for 60 minutes, placing the sample film on a white paper, whereon an oily ink is applied with a doctor blade, and wherein the numbers of ink dots that appear on the white paper represent the pin hole occurrence.

7. The film of claim 1, wherein the heat shrinkage rates in the longitudinal and transverse directions are both 8% or less when subjected to heat treatment at 150°C in a circulating air oven for 30 minutes,
wherein the heat shrinkage rate is measured with a sample having a size of 200mm x 15mm that is obtained at 150°C in a circulating air oven for 30 minutes, wherein the shrinkage in longitudinal and transverse direction is calculated according to the formula:

$$\text{shrinkage}(\%) = (\text{length before heat treatment} - \text{length after heat treatment})/\text{length before heat treatment} \times 100.$$

8. The film of claim 1, wherein the elongation degradations in the longitudinal and transverse directions are both 30% or less when heated at 180°C for two seconds, wherein the elongation degradation is measured according to ASTM D 882.

9. A process of manufacturing the film of claim 1, comprising the steps of: drawing an undrawn sheet of polyester resin polymerized from a glycol component and an acid component to a ratio of 2 to 4 in the longitudinal direction and to a ratio of 3 to 5 in the transverse direction; and subjecting the drawn sheet to heat-setting at a temperature range of 180 to 225°C, wherein the glycol component mainly includes 1,3-propanediol and the acid component mainly includes terephthalic acid or dimethyl terephthalate;
wherein 50 mole% or less of the glycol component is selected from the group consisting of 2,2-dimethyl- 1,3-propanediol, 2-methyl-1,3 -propanediol, and a mixture thereof.

10. The process of claim 9, wherein 50 mole% or more of the glycol component is 1,3-propanediol.

11. The process of claim 9, wherein 85 mole% or more of the acid component is terephthalic acid or dimethyl terephthalate.

12. The process of claim 9, wherein 15 mole% or less of the acid component is a linear aliphatic dibasic acid having 2 or more carbons.

13. The process of claim 12, wherein the aliphatic dibasic acid is selected from the group consisting of succinic acid, glutaric acid, adipic acid, suberic acid, azelaic acid, sebacic acid and ester derivatives thereof.

14. The process of claim 9, further comprising the step of relaxation between the steps of drawing and heat-setting.

15. The process of claim 14, wherein the relaxation step is conducted at a temperature between 140 and 180°C, relaxation rate being between 7 and 14%.

16. A wrapping material comprising any one of the films of claims 1 through 8.

17. A wrapping material, comprising:

 any one of the films of claims 1 through 8 as a substrate; and
 an additional polymer layer or metal layer placed on the substrate.


**Patentansprüche**

1. Biaxial orientierte Polyesterfolie, angefertigt aus einem Polyesterharz, hergestellt durch Polymerisieren einer Glycolkomponente, hauptsächlich umfassend 1,3-Propandiol, und einer Säurekomponente, hauptsächlich umfassend Terephthalsäure oder Dimethylterephthalat, wobei die Polyesterfolie eine Flächenaufprallabsorptionsenergie (unit impact absorption energy) von 9,8 N-cm/$\mu$m (1,0 kgf-cm/$\mu$m) oder mehr besitzt, wobei die Flächenaufprallabsorbtions-energie gemäß ASTM D 3420 gemessen wird, und
wobei 50 mol% oder weniger der Glycolkomponente ausgewählt ist aus der Gruppe, bestehend aus 2,2-Dimethyl-1,3-propandiol, 2-Methyl-1,3-propandiol, und einer Mischung davon.

2. Folie nach Anspruch 1, wobei 50 mol% oder mehr der Glycolkomponente 1,3-Propandiol ist.

3. Folie nach Anspruch 1, wobei 85 mol% oder mehr der Säurekomponente Terephthalsäure oder Dimethylterephthalat ist.

4. Folie nach Anspruch 1, wobei 15 mol% oder weniger der Säurekomponente eine lineare, aliphatische, zweibasische Säure, die 2 oder mehr Kohlenstoffe besitzt, ist.

5. Folie nach Anspruch 4, wobei die aliphatische, zweibasische Säure ausgewählt ist aus der Gruppe, bestehend aus Bernsteinsäure, Glutarsäure, Adipinsäure, Suberinsäure, Azelainsäure, Sebacinsäure, und Esterderivaten davon.

6. Folie nach Anspruch 1, wobei das Auftreten von Nadellöchern (pin-hole occurence) 25 oder weniger ist, nach Unterziehen von wiederholter Belastung bei Raumtemperatur,
wobei das Auftreten von Nadellöchern gemessen wird durch Rotieren einer Probefolie bei einem Winkel von 420° für 2770 Zyklen für 60 Minuten, Anbringen der Probefolie auf ein weißes Papier, auf dem eine ölige Tinte mit Hilfe eines Rakels aufgetragen wurde, wobei die Anzahl der Tintenpunkte, die auf dem weißen Papier erscheinen, das Auftreten von Nadellöchern darstellt.

7. Folie nach Anspruch 1, wobei die Wärmeschrumpfraten in den Längs- und Querrichtungen beide 8% oder weniger sind, wenn sie einer Wärmebehandlung bei 150° C in einem Umluftofen für 30 Minuten unterzogen wird.
wobei die Wärmeschrumpfrate mit einer Probe gemessen wird, die eine Größe von 200mm x 15mm besitzt, die erhalten wird bei 150° C in einem Umluftofen für 30 Minuten, wobei der Schrumpf in Längs- und Querrichtung gemäß der folgenden Formel berechnet wird:

Schrumpf(%) = (Länge vor der Wärmebehandlung − Länge nach der Wärmebehandlung)/Länge vor der Wärmebehandlung X 100.

8. Folie nach Anspruch 1, wobei die Dehnbarkeitsverschlechterungen in den longitudinalen und transversen Richtungen beide 30% oder weniger sind, wenn sie bei 180° C für zwei Sekunden erwärmt wird, wobei die Dehnbarkeitsverschlechterung gemäß ASTM D 882 gemessen wird.

9. Verfahren zum Erzeugen einer Folie nach Anspruch 1, umfassend die Schritte: Verstrecken einer unverstreckten Folie eines Polyesterharzes, polymerisiert aus einer Glycolkomponente und einer Säurekomponente, auf ein Verhältnis von 2 bis 4 in der Längsrichtung und auf ein Verhältnis von 3 bis 5 in der Querrichtung, Unterziehen der verstreckten Folie einer Thermofixierung (heat-setting) in einem Temperaturbereich von 180 bis 225° C, wobei die Glycolkomponente hauptsächlich 1,3-Propandiol beinhaltet, und die Säurekomponente hauptsächlich Terephthalsäure oder Dimethylterephthalat beinhaltet;
wobei 50 mol% oder weniger der Glycolkomponente ausgewählt ist aus der Gruppe, bestehend aus 2,2-Dimethyl-1,3-propandiol, 2-Methyl-1,3-propandiol, und einer Mischung davon.

10. Verfahren nach Anspruch 9, wobei 50 mol% oder mehr der Glycolkomponente 1,3-Propandiol ist.

11. Verfahren nach Anspruch 9, wobei 85 mol% oder mehr der Säurekomponente Terephtalsäure oder Dimethylterephthalat ist.

12. Verfahren nach Anspruch 9, wobei 15 mol% oder weniger der Säurekomponente eine lineare, aliphatische, zweibasische Säure, die 2 oder mehr Kohlenstoffe besitzt, ist.

13. Verfahren nach Anspruch 12, wobei die aliphatische zweibasische Säure ausgewählt ist aus der Gruppe, bestehend aus Bernsteinsäure, Glutarsäure, Adipinsäure, Suberinsäure, Azelainsäure, Sebacinsäure, und Esterderivaten davon.

14. Verfahren nach Anspruch 9, zusätzlich umfassend den Schritt des Relaxierens zwischen den Schritten des Verstreckens und des Thermofixierens.

15. Verfahren nach Anspruch 14, wobei der Relaxationsschritt bei einer Temperatur zwischen 140 und 180° C durchgeführt wird, wobei die Relaxationsrate zwischen 7 und 14% ist.

16. Verpackungsmaterial, umfassend irgendeine der Folien nach den Ansprüchen 1 bis 8.

17. Verpackungsmaterial, umfassend:

   irgendeine der Folien nach Anspruch 1 bis 8 als ein Substrat; und

eine zusätzliche Polymerschicht oder Metallschicht, die sich auf dem Substrat befindet.

**Revendications**

1. Un film de polyester à orientation biaxiale fabriqué à partir d'une résine polyester, préparé par la polymérisation d'un composant glycol comprenant principalement 1 ,3-propanediol, et un composant acide comprenant principalement un acide téréphtalique ou du téréphtalate de diméthyle, le film de polyester ayant une énergie d'absorption d'impact unitaire de 9.8 N-cm/$\mu$m (1.0 kgf-cm/$\mu$m) ou plus, dans lequel l'énergie d'absorption d'impact unitaire est mesurée selon ASTM D 3420, et
dans lequel 50 % en mole ou moins, du composant glycol est sélectionné parmi le groupe consistant en un 2,2-diméthyl-1,3-propanediol, un 2-méthyl-1,3-propanediol, et un mélange de ces derniers.

2. Le film selon la revendication 1, dans lequel 50 % en mole ou plus du composant glycol est un 1,3-propanediol.

3. Le film selon la revendication 1, dans lequel 85 % en mole ou plus du composant acide est un acide téréphtalique ou un téréphtalate de diméthyle.

4. Le film selon la revendication 1, dans lequel 15 % en mole ou moins du composant acide est un acide dibasique aliphatique linéaire ayant 2 atomes de carbone ou plus.

5. Le film selon la revendication 4, dans lequel l'acide dibasique aliphatique est sélectionné parmi le groupe consistant en un acide succinique, un acide glutarique, un acide adipique, un acide subérique, un acide azélaïque, un acide sébacique et des dérivés ester de ces derniers.

6. Le film selon la revendication 1, dans lequel le nombre de trous d'épingle s'élève à 25 ou moins après avoir été soumis à une contrainte répétée à température ambiante,
dans lequel le nombre de trous d'épingle est mesuré en faisant tourner un échantillon de film autour d'un angle de 420° à 2770 cycles pendant 60 minutes, en plaçant l'échantillon de film sur un papier blanc, sur lequel une encre grasse est appliquée avec une racle, et dans lequel le nombre de taches d'encre qui apparaissent sur le papier blanc représente le nombre de trous d'épingle.

7. Le film selon la revendication 1, dans lequel le taux de rétrécissement thermique dans les directions longitudinale et transversale est pour les deux de 8% ou moins quand soumise à un traitement thermique à 150°C dans un four à circulation d'air pendant 30 minutes,
dans lequel le taux de rétrécissement thermique est mesuré avec un échantillon ayant une taille de 200mm x 15 mm qui est obtenu à 150°C dans un four à circulation d'air pendant 30 minutes, dans lequel le taux de rétrécissement thermique dans les directions longitudinale et transversale est calculé à partir de la formule:

rétrécissement (%) = (longueur avant le traitement thermique - longueur après traitement thermique)/ longueur avant le traitement thermique X 100.

8. Le film selon la revendication 1, dans lequel la dégradation d'élongation dans les directions longitudinale et transversale est pour les deux de 30% ou moins quand chauffé à 180°C pendant deux secondes, dans lequel la dégradation d'élongation est mesurée selon ASTM D 882.

9. Un procédé de fabrication du film selon la revendication 1, comprenant les étapes de: étirer une feuille non étiré de résine polyester polymérisée à partir d'un composant de glycol et un composant acide avec un rapport de 2 à 4 dans la direction longitudinale et avec un rapport de 3 à 5 dans la direction transversale ; et soumettre la feuille étirée à un durcissement à chaud à des températures de la gamme de 180 à 225°C, dans lequel le composant glycol inclut principalement un 1,3-propanediol et le composant acide inclut principalement un acide téréphatlique ou un téréphtalate de diméthyle;
dans lequel 50 % en mole ou moins, du composant glycol est sélectionné parmi le groupe consistant en un 2,2-diméthyl-1,3-propanediol, un 2-méthyl-1,3-propanediol, et un mélange de ces derniers.

10. La méthode selon la revendication 9, dans lequel 50 % en mole ou moins, du composant glycol est un 1,3-propanediol.

**11.** La méthode selon la revendication 9, dans laquelle 85 % en mole ou plus du composant acide est un acide téréphtalique ou un téréphtalate de diméthyle.

**12.** La méthode selon la revendication 9, dans laquelle 15 % en mole ou moins du composant acide est un acide dibasique aliphatique linéaire ayant 2 atomes de carbone ou plus.

**13.** La méthode selon la revendication 12, dans laquelle l'acide dibasique aliphatique est sélectionné parmi le groupe consistant en un acide succinique, un acide glutarique, un acide adipique, un acide subérique, un acide azélaïque, un acide sébacique et des dérivés ester de ces derniers.

**14.** La méthode selon la revendication 9, comprenant en outre l'étape de relaxation entre les étapes d'étirement et de durcissement à chaud.

**15.** La méthode selon la revendication 14, dans laquelle l'étape de relaxation est conduite à une température entre 140 et 180°C, le taux de relaxation étant entre 7 et 14%.

**16.** Un matériau d'emballage comprenant un film quelconque selon les revendications 1 à 8.

**17.** Un matériau d'emballage, comprenant:

un film quelconque selon les revendications 1 à 8 en tant que substrat; et
une couche polymérique ou un couche métallique additionnelle placée sur le substrat.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000063537 A